# EUROPEAN PATENT SPECIFICATION

(11) **EP 4 249 342 B1**
(45) Date of publication and mention of the grant of the patent: **06.11.2024**
(21) Application number: 23159257.7
(22) Date of filing: 28.02.2023
(51) Int. Cl.: B60W 60/00, B60W 30/09, B60W 30/095

(54) **CONTROL SUBSYSTEM AND METHOD TO DEFINE THE RESPONSE OF AN AUTONOMOUS VEHICLE TO AN UNKNOWN OBJECT**
STEUERUNGSSUBSYSTEM UND VERFAHREN ZUR DEFINITION DER REAKTION EINES AUTONOMEN FAHRZEUGS AUF EIN UNBEKANNTES OBJEKT
SOUS-SYSTÈME DE COMMANDE ET PROCÉDÉ POUR DÉFINIR LA RÉPONSE D'UN VÉHICULE AUTONOME À UN OBJET INCONNU

(30) Priority: 21.03.2022 US 202263322116 P
(43) Date of publication of application: 27.09.2023
(73) Proprietor: TuSimple, Inc., San Diego, CA 92122 (US)
(72) Inventor: Shi, Zhujia, San Diego, 92122 (US); Foster, Scott Douglas, San Diego, 92122 (US); Li, Dishi, San Diego, 92122 (US); Willoughby, Hunter Scott, San Diego, 92122 (US); Price, Charles A., San Diego, 92122 (US); Wang, Panqu, San Diego, 92122 (US); Zhao, Xiangchen, San Diego, 92122 (US); Jin, Yuchao, San Diego, 92122 (US)
(74) Representative: Hamer, Thomas Daniel

(56) References cited:
- WO-A1-2021/086781
- DE-A1- 102019 201 690
- US-A1- 2020 166 947
- US-A1- 2020 209 857
- US-A1- 2021 157 321

## Description

### TECHNICAL FIELD

The present invention relates generally to autonomous vehicles and, more particularly, to controlling the operation of an autonomous vehicle upon the detection of an unknown object on a carriageway along which the autonomous vehicle is to travel.

### BACKGROUND

One aim of autonomous vehicle technologies is to provide vehicles that can safely navigate towards a destination with limited or no driver assistance. In some instances, unanticipated objects may be on the carriageway including, in some instances, within a driving lane along which the autonomous vehicle is to travel. In an instance in which the unanticipated object is identified to be a known type of object, the autonomous vehicle may be controlled so as to respond to the known object in a particular fashion that may be based upon the type of object that has been identified. However, in other instances, the unanticipated object is unknown and is not a recognized type of object. Current autonomous vehicle technologies may respond uniformly in response to the detection of an unknown object which may, in turn, lead to responses by the autonomous vehicle that are unnecessary or excessive for a particular unknown object, thereby potentially creating more disruption to the traffic flow than is required.

DE102019201690A1 relates to a method and an assistance system for monitoring the environment of a vehicle, and discloses in the case of a small, unknown immovable object recognized as a small stone, for example, it is conceivable to select driving over the object as a collision avoidance strategy.

### SUMMARY

According to the invention, a control subsystem, method and computer program product are provided in order to respond to an unknown object on a carriageway along which an autonomous vehicle is to travel. Based upon characteristics of the object and the location of the object relative to the autonomous vehicle, a motion plan may be defined for the autonomous vehicle which not only ensures the safety of the unknown object, but also safely and efficiently navigates the autonomous vehicle relative to the object. As such, the control subsystem, method, computer program product and autonomous vehicle of an example embodiment recognize various problems and previously unmet needs related to the navigation of autonomous vehicles which previously generally responded to the detection of an unknown object in the uniform manner regardless of characteristics of the unknown object. In contrast, the control subsystem, method, computer program product and autonomous vehicle of an example embodiment tailor the response based upon characteristics, such as the size, of the unknown object and the location of the unknown object relative to the autonomous vehicle, to continue to insure the safety of the object and the autonomous vehicle, but to respond in a more measured manner that may result in less disruption to the traffic flow about the object. As such, certain embodiments of the present invention provide unique solutions to technical problems of autonomous vehicle navigation techniques including problems associated with safely navigating about an unknown object that is detected on a carriageway along which an autonomous vehicle is to travel.

In an example embodiment, a control subsystem of an autonomous vehicle is provided that includes processing circuitry configured to receive sensor data from at least one vehicle sensor of the autonomous vehicle. The sensor data includes location coordinates of an object on a carriageway along which the autonomous vehicle is to travel. The processing circuitry is also configured to evaluate the sensor data to determine whether the object is known or unknown. In an instance in which the object is unknown, the processing circuitry is configured to determine the size of the object. The processing circuitry is further configured to define a motion plan for the autonomous vehicle depending upon the size of the object and the location coordinates of the object relative to the autonomous vehicle. The motion plan that is defined is dependent upon the size of the object with different motion plans being defined for differently sized objects. Various motion plans may be defined including, for example, changing lanes, slowing and biasing away from the object or stopping the autonomous vehicle depending upon the size of the object and the location coordinates of the object relative to the autonomous vehicle. The processing circuitry is additionally configured to update driving instructions for the autonomous vehicle based upon the motion plan that is defined.

The processing circuitry is configured to determine the size of the object by determining the height and width associated with the object. The processing circuitry is further configured to classify the object as a larger object or a smaller object based on the height of the object. The processing circuitry is also configured to define a motion plan for the autonomous vehicle such that a larger distance is maintained between the autonomous vehicle and the object in an instance in which the object is classified as the larger object than in an instance in which the object is classified as the smaller object. In another example embodiment, the processing circuitry is further configured to classify the object as a larger object, an intermediate object or a smaller object based on the height of the object. In this example embodiment, the processing circuitry is configured to define the motion plan for the autonomous vehicle such that the autonomous vehicle straddles the object in an instance in which the object is classified as the smaller object.

According to the invention, a method is provided that includes receiving sensor data from at least one vehicle sensor of an autonomous vehicle. The sensor data includes location coordinates of an object on a carriageway along which the autonomous vehicle is to travel. The method also includes evaluating the sensor data to determine whether the object is known or unknown and, in an instance in which the object is unknown, determining the size of the object. The method further includes defining a motion plan for the autonomous vehicle depending upon the size of the object and the location coordinates of the object relative to the autonomous vehicle. The motion plan that is defined is dependent upon the size of the object with different motion plans being defined for differently sized objects. For example, the motion plan may be one of changing lanes, slowing and biasing away from the object or stopping the autonomous vehicle depending upon the size of the object and the location coordinates of the object relative to the autonomous vehicle. Regardless of the particular type of motion plan, the method further includes updating driving instructions for the autonomous vehicle based upon the motion plan that is defined.

The method according to the invention determines the size of the object by determining the height and width associated with the object. The method includes classifying the object as a larger object or a smaller object based upon the height of the object. The method includes defining the motion plan for the autonomous vehicle such that a larger distance is maintained between the autonomous vehicle and the object in an instance in which the object is classified as larger object than in an instance in which the object is classified as a smaller object. In another example embodiment, the method classifies the object as larger object, an intermediate object or a smaller object based upon the height of the object. In this example embodiment, the method may define the motion plan for the autonomous vehicle such that the autonomous vehicle straddles the object in an instance in which the object is classified as the smaller object.

According to the invention, a computer program product is provided that includes at least one non-transitory computer-readable storage medium having computer-executable program code instructions stored therein. The computer-executable program code instructions include program code instructions configured to receive sensor data from at least one vehicle sensor of an autonomous vehicle. The sensor data includes location coordinates of an object along a carriageway along which the autonomous vehicle is to travel. The computer-executable program code instructions also include program code instructions configured to evaluate the sensor data to determine whether the object is known or unknown and, in an instance in which the object is unknown, the program code instructions configured to determine the size of the object. The computer-executable program code instructions further include program code instructions configured to define a motion plan for the autonomous vehicle depending upon the size of the object and the location coordinates of the object relative to the autonomous vehicle. The motion plan that is defined is dependent upon the size of the object with different motion plans being defined for differently sized objects. For example, the motion plan made be one of changing lanes, slowing in biasing away from the object or stopping the autonomous vehicle depending upon the size of the object and the location coordinates of the object relative to the autonomous vehicle. Regardless of the type of motion plan, the computer disc executable program code instructions also include program code instructions configured to update the driving instructions for the autonomous vehicle based upon the motion plan that is defined.

The program code instructions that are configured to determine the size of the object include, program code instructions configured to determine the height and width associated with the object. The computer-executable program code instructions also include program code instructions configured to classify the object as a larger object or a smaller object based upon the height of the object. The program code instructions configured to define the motion plan for the autonomous vehicle provide for a larger distance to be maintained between the autonomous vehicle and the object in an instance in which the object is classified as the larger object than in an instance in which the object is classified as a smaller object. In another example embodiment, the computer-executable program code instructions further include program code instructions configured to classify the object as a larger object, an intermediate object or a smaller object based on the height of the object. The program code instructions of this example embodiment may be configured to define the motion plan such that the autonomous vehicle straddles the object in an instance in which the object is classified as the smaller object.

In yet another example embodiment, not covered by the claims, an apparatus is provided that includes means for receiving sensor data from at least one vehicle senor of an autonomous vehicle. The sensor data includes location coordinates of an object along a carriageway along which the autonomous vehicle is to travel. The apparatus also includes means for evaluating the sensor data to determine whether the object is known or unknown and, in an instance in which the object is unknown, means for determining the size of the object. The apparatus further includes means for defining the motion plan for the autonomous vehicle depending upon the size of the object and the location coordinates of the object relative to the autonomous vehicle. The motion plan that is defined as dependent upon the size of the object with different motion plans being defined for differently sized objects. For example, the motion plan may be one of changing lanes, slowing and biasing away from the object or stopping the autonomous vehicle depending upon the size of the object and the location coordinates of the object relative to the autonomous vehicle. The apparatus further includes means for updating driving instructions for the autonomous vehicle based upon the motion plan that is defined.

The means for determining the size of the object in accordance with an example embodiment includes means for determining the height and width associated with the object. In this example embodiment, the apparatus further includes means for classifying the object as a larger object or a smaller object based upon the height of the object. The means for defining the motion plan for the autonomous vehicle in this example embodiment may include means for defining the motion plan for the autonomous vehicle such that a larger distance is maintained between the autonomous vehicle and the object in an instance in which the object is classified as the larger object then in an instance in which the object is classified as the smaller object. In another example embodiment, the apparatus also includes means for classifying the object as a larger object, an intermediate object or a smaller object based on the height of the object. In this example embodiment, the means for defining the motion plan for the autonomous vehicle may include means for defining the motion plan for the autonomous vehicle such that the autonomous vehicle straddles the object in an instance in which the object is classified as the smaller object.

In another example embodiment, not covered by the claims, a system is provided that includes an autonomous vehicle. The autonomous vehicle may include at least one vehicle sensor that collects sensor data that includes location coordinates of an object on a carriageway along which the autonomous vehicle is to travel. The system also may include a control subsystem carried by or otherwise associated with the autonomous vehicle. The control subsystem may include processing circuitry configured to receive the sensor data from the at least one vehicle sensor. The sensor data may include location coordinates of the object. The processing circuitry is also configured to evaluate the sensor data to determine whether the object is known or unknown. In an instance in which the object is unknown, the processing circuitry is configured to determine the size of the object. The processing circuitry is further configured to define a motion plan for the autonomous vehicle depending upon the size of the object and the location coordinates of the object relative to the autonomous vehicle. The motion plan that is defined is dependent upon the size of the object with different motion plans being defined for differently sized objects. Various motion plans may be defined including, for example, changing lanes, slowing and biasing away from the object or stopping the autonomous vehicle depending upon the size of the object and the location coordinates of the object relative to the autonomous vehicle. The processing circuitry is additionally configured to update driving instructions for the autonomous vehicle based upon the motion plan that is defined.

The system and, more particularly, the processing circuitry of an example embodiment is configured to determine the size of the object by determining the height and width associated with the object. In this example embodiment, the processing circuitry is further configured to classify the object as a larger object or a smaller object based on the height of the object. The processing circuitry of this example embodiment may also be configured to define a motion plan for the autonomous vehicle such that a larger distance is maintained between the autonomous vehicle and the object in an instance in which the object is classified as the larger object than in an instance in which the object is classified as the smaller object. In another example embodiment, the processing circuitry is further configured to classify the object as a larger object, an intermediate object or a smaller object based on the height of the object. In this example embodiment, the processing circuitry is configured to define the motion plan for the autonomous vehicle such that the autonomous vehicle straddles the object in an instance in which the object is classified as the smaller object.

### BRIEF DESCRIPTION OF THE FIGURES

For a more complete understanding of this invention, reference is now made to the following brief description, taken in connection with the accompanying drawings and detailed description, wherein like referenced numerals represent like parts.
Figure 1 is a schematic diagram of a carriageway on which an autonomous vehicle encounters an unknown object;
Figure 2 is a block diagram of a control subsystem configured in accordance with an example embodiment of the present invention;
Figure 3 is a flow chart illustrating operations performed to define a motion plan that depends upon the size of the unknown object in accordance with an example embodiment of the present invention;
Figures 4A and 4B are flow charts illustrating operations performed to define the motion plan for an autonomous vehicle in response to the unknown object being classified as a larger object in accordance with an example embodiment of the present invention;
Figure 5 is a schematic diagram illustrating a motion plan for an autonomous vehicle that directs the autonomous vehicle to change lanes in response to sensing an object in accordance with an example embodiment of the present invention;
Figure 6 is a schematic diagram illustrating a motion plan for an autonomous vehicle that directs the autonomous vehicle to slow and to bias away from the object that has been sensed to be within a lane of the carriageway in accordance with an example embodiment to the process invention;
Figure 7 is a schematic diagram of a motion plan defined for an autonomous vehicle in accordance with an example embodiment of the present invention in which the autonomous vehicle comes to a stop prior to reaching the object;
Figure 8 is a flow chart illustrating the operations performed to define a motion plan for an autonomous vehicle in response to the unknown object being classified as a smaller object in accordance with an example embodiment of the present invention;
Figure 9 illustrates a diagram of an autonomous vehicle that may be configured to implement autonomous driving operations to define a motion plan that relies partly on the size of an object that has been sensed within the carriageway in accordance with an example embodiment of the present invention;
Figure 10 illustrates an example system for providing autonomous driving operations for the autonomous vehicle of Figure 9; and
Figure 11 illustrates a diagram of an in-vehicle control computer included in an autonomous vehicle in accordance with an example embodiment of the present invention.

### DETAILED DESCRIPTION OF THE FIGURES

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

A control subsystem of an autonomous vehicle, as well as a corresponding method and computer program product are provided in accordance with an example embodiment. The control subsystem, method and computer program product may be employed by or in conjunction with any of a variety of different types of autonomous vehicles including a motor vehicle, such as an automobile or a truck, and more particularly, a tractor trailer that is configured to operate autonomously or at least semi-autonomously. Regardless of the type of autonomous vehicle, the control subsystem, method and computer program product of an example embodiment are configured to update driving instructions for the autonomous vehicle based upon a motion plan that is defined in a manner that is dependent upon the size of an object that has been identified on or along the carriageway along which the autonomous vehicle is to travel. As such, the control subsystem, method and computer program product may provide for more efficient operation of the autonomous vehicle by safely navigating about the object in a controlled fashion, thereby creating less disruption to the traffic flow about the object.

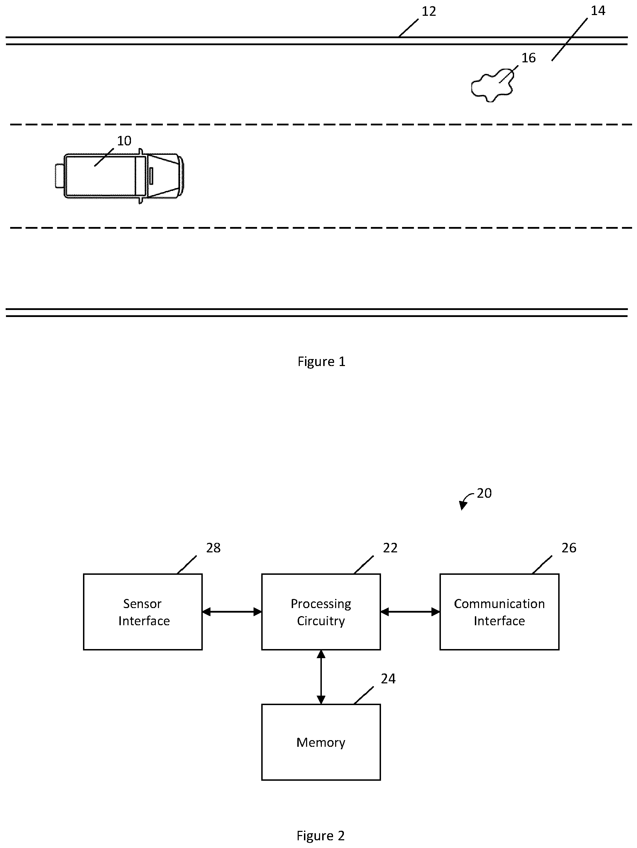

Although the control subsystem, method and computer program product of an example embodiment may be employed in conjunction with a variety of different types of autonomous vehicles, the control subsystem, method and computer program product will be described in conjunction with a truck, such as a tractor trailer, that is configured to operate autonomously by way of example, but not of limitation. As shown in Figure 1, the autonomous vehicle 10 is configured to travel along a carriageway 12 from an origin to a destination. The carriageway is a paved width of road on which a vehicle, such as the truck, is not restricted by any physical barrier or separation with respect to lateral movements. In one example depicted in Figure 1, the carriageway is a paved road having a plurality of lanes 14 with the autonomous vehicle traveling along one of those lanes, such as the left most lane in Figure 1.

An object may be on or near the carriageway along which the autonomous vehicle is to travel. As shown, for example, in Figure 1, an object 16 may be within the same lane 14 of the carriageway 12 along which the autonomous vehicle 10 is to travel. Alternatively, the object may be in another lane of the carriageway, on a shoulder of the carriageway or on another paved surface on or along the carriageway, such as within a gore point proximate an entrance or exit ramp. The object may be any of a wide variety of different types of objects including, but not limited to debris, portions of a tire, household objects, luggage, coolers or the like as well as a living being, such as a person, an animal, etc. As the object is detected in advance of the autonomous vehicle reaching the object, the control subsystem, method and computer program product of an example embodiment are configured to attempt to identify the object and to take appropriate action to safely and efficiently navigate about the object. In an instance in which the object is unable to be identified and, as a result, is unknown, the control subsystem, method and computer program product of an example embodiment are configured to determine the size of the object and to define the motion plan from which to update the driving instructions for the autonomous vehicle in a manner that is based upon the size of the object and the location of the object relative to the autonomous vehicle. As such, even in an instance in which the object is unknown, the control subsystem, method and computer program product of an example embodiment are configured to efficiently and safely control navigation of the autonomous vehicle relative to the object that had been detected, thereby creating less disruption to the traffic flow about the object.

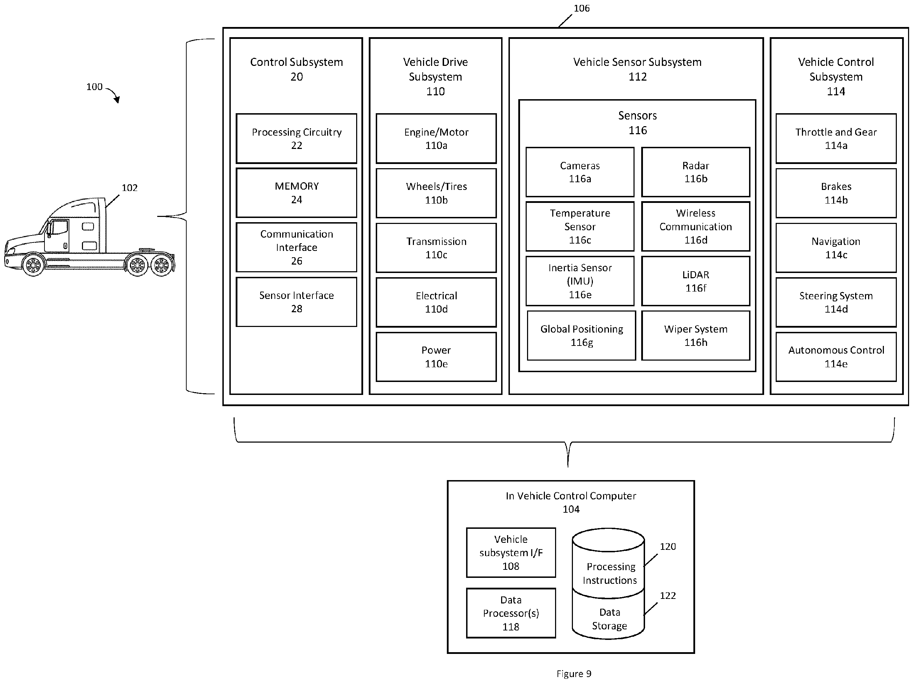

Referring now to Figure 2, the control subsystem 20 associated with an autonomous vehicle 10 is depicted. The control subsystem may be on board the autonomous vehicle as described below or may be off board the autonomous vehicle and in communication therewith. In either instance, the control subsystem is embodied by a computing device, such as a computer. In one embodiment, the control subsystem may be a subsystem of an in-vehicle control computer system (See Figure 9). The control subsystem may be implemented by one or more computing devices that may serve to determine a traveling pathway free of objects for the autonomous vehicle. In an example embodiment, the control subsystem is in signal communication with the in-vehicle control computer system 104 (and its components) and the operation server.

As shown in Figure 2, the control subsystem 20 includes processing circuitry 22 and, in some embodiments, includes memory 24. The control subsystem of an example embodiment also includes a communication interface 26 and optionally a sensor interface 28. In an embodiment in which the control subsystem is carried by the autonomous vehicle 10, the communication interface may be configured to communicate with any of one or more various external systems including, for example, an operation server, such as an oversight system, the communication systems of law enforcement or other traffic safety personnel, or the like. Alternatively, in an embodiment in which the control subsystem is off board the autonomous vehicle, the communication interface may be configured to communicate not only with the other various external systems, but also with the autonomous vehicle and, more particularly, the various subsystems of the autonomous vehicle. It should be noted that the components, devices, and elements illustrated in and described with respect to Figure 2 are not mandatory and thus some may be omitted in certain embodiments. Additionally, some embodiments may include further or different components, devices, or elements beyond those illustrated in and described with respect to Figure 2.

As shown in Figure 2, however, the control subsystem 20 of an example embodiment incudes processing circuitry 22 configured to perform actions in accordance with one or more example embodiments disclosed herein. In this regard, the processing circuitry may be configured to perform and/or control performance of one or more functionalities of the control subsystem in accordance with various example embodiments. The processing circuitry may be configured to perform data processing, application execution, and/or other processing and management services according to one or more example embodiments.

In some example embodiments, the processing circuitry 22 may include a processor, and in some embodiments, such as that illustrated in Figure 2, may further include memory 24. The processing circuitry may be in communication with or otherwise control the communication interface 26. The processing circuitry may be embodied in a number of different ways. For example, the processing circuitry may be embodied as various processing means such as one or more of a microprocessor or other processing element, a coprocessor, a controller, or various other computing or processing devices including integrated circuits such as, for example, an ASIC (application specific integrated circuit), an FPGA (field programmable gate array), or the like. For example, the processing circuitry of the control subsystem may be embodied as a circuit chip (e.g., an integrated circuit chip) configured (e.g., with hardware, software, or a combination of hardware and software) to perform operations described herein.

Although the processing circuitry 22 may include a single processor, it will be appreciated that the processing circuitry may comprise a plurality of processors. The plurality of processors may be in operative communication with each other and may be collectively configured to perform one or more functionalities of the control subsystem 20 as described herein. The plurality of processors may be embodied on a single computing device or distributed across a plurality of computing devices collectively configured to function as the control subsystem. In some example embodiments, the processing circuitry may be configured to execute instructions stored in the memory 24 or otherwise accessible to the processing circuitry. As such, whether configured by hardware or by a combination of hardware and software, the processing circuitry may represent an entity (e.g., physically embodied in circuitry) capable of performing operations according to embodiments of the present invention while configured accordingly. Thus, for example, when the processing circuitry is embodied as an ASIC, FPGA, or the like, the processing circuitry may be specifically configured hardware for conducting the operations described herein. Alternatively, as another example, when the processing circuitry is embodied as an executor of software instructions, the instructions may specifically configure the processing circuitry to perform one or more operations described herein.

In some example embodiments, the memory 24 may include one or more non-transitory memory devices such as, for example, volatile and/or non-volatile memory that may be either fixed or removable. In this regard, the memory may comprise a non-transitory computer-readable storage medium. It will be appreciated that while the memory is illustrated as a single memory, the memory may comprise a plurality of memories. The plurality of memories may be embodied on a single computing device or may be distributed across a plurality of computing devices. The memory may be configured to store information, data, applications, computer program code, instructions and/or the like for enabling the control subsystem to carry out various functions in accordance with one or more example embodiments.

The memory 24 may be further configured to buffer input data for processing by the processing circuitry 22. Additionally or alternatively, the memory may be configured to store instructions for execution by the processing circuitry. Among the contents of the memory, applications may be stored for execution by the processing circuitry to carry out the functionality associated with each respective application. In some cases, the memory may be in communication with one or more of the processing circuitry and/or communication interface 26, for passing information among components of the control subsystem.

The communication interface 26, such as a network interface, may include one or more interface mechanisms for enabling communication with other devices and/or networks. In some cases, the communication interface may be any means such as a device or circuitry embodied in either hardware, or a combination of hardware and software that is configured to receive and/or transmit data from/to a network and/or any other device or module in communication with the processing circuitry 22. By way of example, the communication interface may be configured to communicate with any of one or more various external systems such as an operation server, the communication systems of law enforcement or other traffic safety personnel, or the like, in an embodiment in which the control subsystem is carried by the autonomous vehicle. Alternatively, the communication interface may be configured to communicate with the autonomous vehicle and, more particularly, the various subsystems of the autonomous vehicle in an embodiment in which the control subsystem is off board the autonomous vehicle.

In some example embodiments, the control subsystem 20 may include a sensor interface 28 configured to communicate with one or more vehicle sensors of the autonomous vehicle. Although the sensor interface may be embodied by the processing circuitry 22 and/or the communication interface 26, the sensor interface of an example embodiment is a discrete component configured to communicate with vehicle sensor(s). In an embodiment in which the sensor interface is a discrete component, the sensor interface is also in communication with the processing circuitry in order to provide the processing circuitry with at least some of the sensor data received via the sensor interface.

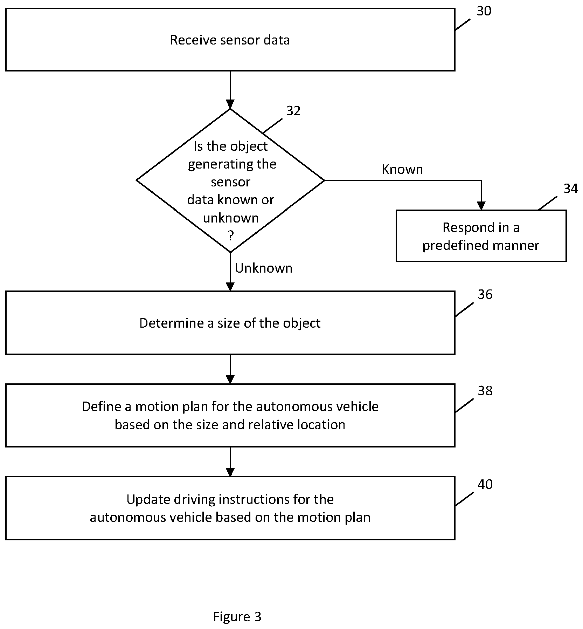

Referring now to Figure 3, a flow chart illustrating the operations performed by a control subsystem, such as the control subsystem 20 of Figure 2, in accordance with an example embodiment are depicted. As shown in block 30, the control subsystem includes means, such as the processing subsystem 22, the communication interface 26, the sensor interface 28 or the like, for receiving sensor data from at least one vehicle sensor of the autonomous vehicle 10 that relates to an object 16 on a carriageway 12 along which the autonomous vehicle is to travel. The sensor data may include the location coordinates of the object on the carriageway. As shown in Figure 2, the processing circuitry is configured to receive the sensor data. Although the sensor data may be received directly by the processing circuitry from the vehicle sensor(s), the processing circuitry of the illustrated embodiment may receive the sensor data via the communication interface and/or via a separate sensor interface configured to communicate with one or more vehicle sensors of the autonomous vehicle.

The sensor data may be provided by a variety of vehicle sensors configured to provide information regarding an object 16 on the carriageway 12 along with the autonomous vehicle 10 is to travel. For example, the vehicle sensor may be a LiDAR (light detection and ranging) sensor, a camera, e.g., an infrared camera, a radar system or the like. With respect to a LiDAR sensor, the LiDAR sensor may have a predefined range defining the distance in advance of the autonomous vehicle at which an object may be reliably detected. For example, a LiDAR sensor may have a range of 150 meters to 200 meters, a range of 250 meters to 300 meters or a range of approximately 500 meters. In an example embodiment in which the vehicle sensor is a LiDAR sensor the sensor data may include distance measurements. For example, the distance measurements may include a distance traveled by an object (e.g., a displacement of an object), distances of an object from a LiDAR sensor at different times (t), etc.

In another example, the sensor data from the LiDAR sensor may include a cloud of point data representing obstacles or objects 16, which have been illuminated by the laser (e.g., radio wave), within the environment surrounding the autonomous vehicle 10, that is, within the detection zones of the vehicle sensors. The cloud of point data may include points corresponding to light emitted from the LiDAR sensors and reflected from objects within the environment surrounding the autonomous vehicle. The time delay between the transmitted light and the reflected light bounced off an object corresponds to the distance between the LiDAR sensor and that object. The intensity of the reflected light bounced off an object may be indicative of a surface type of that object, e.g., a metal, skin, plastic, fabric, concrete, etc.

In a further example, if the vehicle sensors include motion sensors and the resulting sensor data may include motion measurements. For example, the motion measurements may include the motion of an object 16 from a first location to a second location. In such cases, the control subsystem 20 may determine the speed with which the object is moving and the direction of movement of that object. For example, the control subsystem may determine whether an object is moving towards the autonomous vehicle 10, away from the autonomous vehicle, across the autonomous vehicle (e.g., a pedestrian crossing the road), etc.

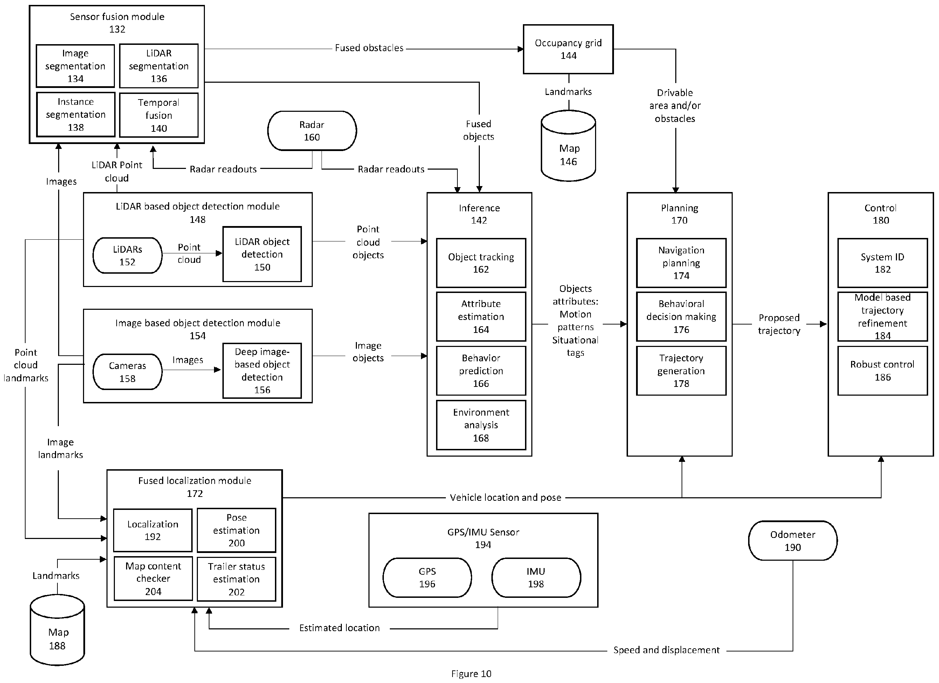

Regardless of the type of vehicle sensor, the range of the vehicle sensor is sufficient such that the object 16 may be detected and the autonomous vehicle 10 may respond so as to efficiently and safely navigate about the object prior to reaching the object. In some example embodiments, the autonomous vehicle includes a plurality of sensors, such as a plurality of different types of sensors and/or a plurality of the same type of sensor having different ranges. In this regard, the control subsystem 20 may be configured to use two or more types of sensor data to determine whether an object is detected (e.g., by combining or fusing camera images, LiDAR data, and radar data as described below with respect to Figure 10).

As shown in block 32 of Figure 3, the control subsystem 20 also includes means, such as the processing circuitry 22 or the like, for evaluating the sensor data to determine whether the object 16 is known or unknown. In this regard, the control subsystem may be configured to identify certain types of known objects based upon sensor data, such as based upon the signature of the object in the sensor data provided by a LiDAR sensor or other type of vehicle sensor. Although objects may be identified to be known, such as a known type of object, in a variety of different manners, the control subsystem, such as the processing circuitry, of an example embodiment may include a machine learning model that has been trained to identify or recognize one or more different types of objects to be a known object. In an instance in which the processing circuitry determines that the object is a known type of object, the control subsystem, such as the processing circuitry, may be configured to respond to the identification of the known type of object in a predefined manner. See block 34.

However, in an instance in which the object 16 is unknown, the control subsystem 20 includes means, such as the processing circuitry 22 or the like, for determining the size of the object. See block 36 of Figure 3. The size of the object may be determined in various manners. In an example embodiment, the size of the object is defined by the height and the width of the object that has been detected. Alternatively, the control subsystem, such as the processing circuitry, may be configured to determine the size of the object based upon a largest cross-sectional dimension of the object, based upon a comparison of the object with predefined profiles of objects of different known sizes, based upon the radius or diameter of a circular or spherical object, or the like. Although the size of the object may be determined by any one of the foregoing or other manners, the control subsystem of an example embodiment includes means, such as the processing circuitry or the like, for determining a classification of the size of the object based upon a comparison of the size of the object to predefined classification thresholds, such as by classifying the object as a larger object or a smaller object or, in another embodiment, by classifying the object as a larger object, an intermediate object or a smaller object. In still other embodiments, additional classifications of the size of the object may be predefined and associated with an object that has been detected based upon the size of the object. Although the predefined classification thresholds may be defined in various manners, the processing circuitry of one example embodiment is configured to classify the object as a larger object or a smaller object, or as a larger object, an intermediate object or a smaller object, based upon the height and/or width of the object. In this example embodiment, the predefined classification threshold may therefore be a measure of the height and/or width of the object.

The control subsystem 20 also includes means, such as the processing circuitry 22 or the like, for defining a motion plan for the autonomous vehicle 10 depending upon the size of the object 16 and the location coordinates of the object relative to the autonomous vehicle. See block 38. As such, the motion plan that is defined may be dependent upon the size of the object with different motion plans being defined for differently sized objects. For example, in an instance in which the size of the object is determined to be that of a larger object or a smaller object, different motion plans may be defined for larger objects than for smaller objects. In another example embodiment in which the size of the object causes the object to be classified as a larger object, an intermediate object or a smaller object, different motion plans may be defined for larger objects, intermediate objects and smaller objects. The control subsystem, such as the processing circuitry, is configured to define a motion plan of the autonomous vehicle such that a larger distance is maintained between the autonomous vehicle and the object in an instance in which the object is classified as a larger object than in an instance in which the object is classified as a smaller object.

As shown in block 40 of Figure 3, the control subsystem 20 further includes means, such as the processing circuitry 22, the communication interface 26 or the like, for updating driving instructions for the autonomous vehicle 10 based upon the motion plan that is defined. In this regard, the driving instructions may be updated such that the autonomous vehicle navigates about the object 16 in an efficient and safe manner by implementing the driving instructions that have been updated. As such, even in an instance in which an object is detected that is unknown, the autonomous vehicle can safely and efficiently navigate about the object in a manner that takes into account the size of the object, thereby tailoring the response of the autonomous vehicle based upon the size of the object in order to further increase the efficiency and safety with which the autonomous vehicle responds to the detection of an unknown object along the carriageway.

### MOTION PLAN DEFINED IN RESPONSE TO DETECTION OF A LARGER OBJECT

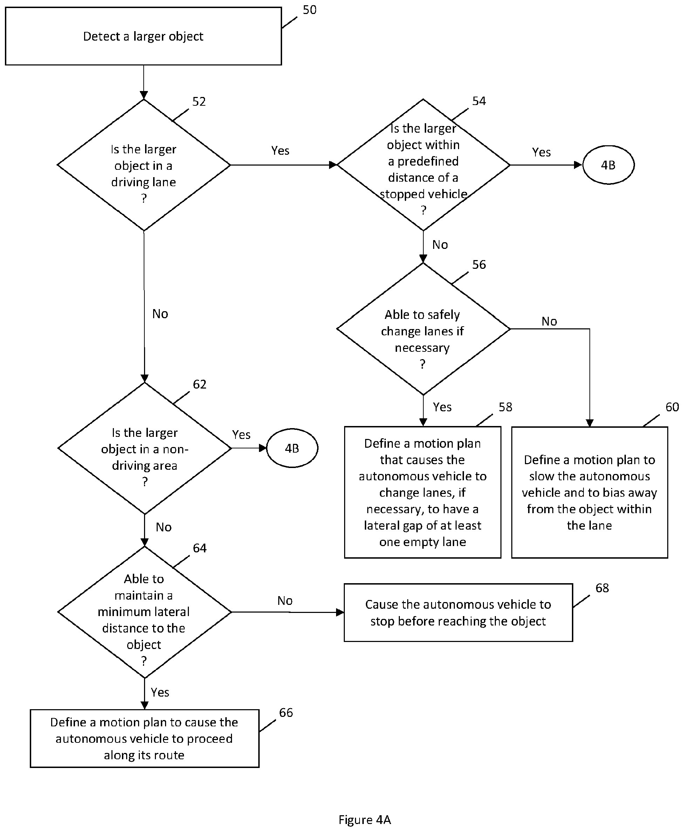

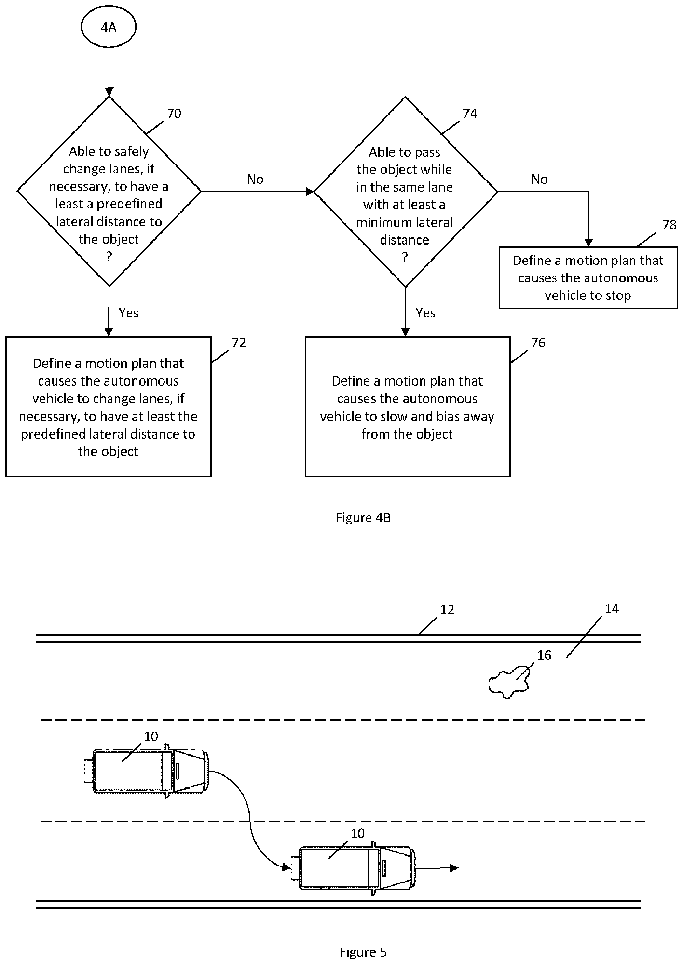

By way of further illustration, the response of a control subsystem 20 and, in turn, the autonomous vehicle 10 directed by the control subsystem to the detection of a larger object will be described below with respect to Figures 4A and 4B by way of example, but not of limitation. In this regard, the control subsystem includes means, such as a processing circuitry 22 or the like, for detecting a larger object. See block 50. As described above, the control subsystem, such as the processing circuitry, may be configured to detect a larger object by determining the size of an object 16 that has been identified along the carriageway 12 along which the autonomous vehicle 10 is to travel and then classifying the object as a larger or smaller object, such as based upon a comparison of the height and/or width of the object to predefined classification threshold(s). Although an object may be classified as a larger object in various manners, the control subsystem of an example embodiment defines a larger object to be an object having a height of at least 90 cm and a width that is at least 20 cm. In this example embodiment, the height and width classification thresholds that are established to classify an object as a larger object may be defined to insure that a person standing on the carriageway is identified as a larger object, thereby resulting in greater clearance being provided between the autonomous vehicle and the person.

As noted above, the motion plan that is defined for the autonomous vehicle 10 depends not only upon the size of the object 16, but also the location coordinates of the object relative to the autonomous vehicle 10. In the illustrated embodiment in which a larger object has been identified, the control subsystem 20 includes means, such as the processing circuitry 22 or the like, for determining the location of the object relative to the autonomous vehicle including the distance therebetween, based upon the respective location coordinates of autonomous vehicle and the object. In this example embodiment, the control subsystem, such as the processing circuitry, determines whether the larger object is in a driving lane 14 of the carriageway 12 along which the autonomous vehicle is traveling, such as the same driving lane of the carriageway in which the autonomous vehicle is traveling or in a different driving lane of the carriageway. See block 52 of Figure 4A In an instance in which the larger object is located within a driving lane of the carriageway, the control subsystem of this example embodiment, such as the processing circuitry, is configured to determine whether the larger object is also located within a predefined distance of a stopped vehicle. See block 54. To do so, the control subsystem, such as the processing circuitry, of an example embodiment may be configured to determine whether the larger object that is within the driving lane of the carriageway is within a predefined distance, such as 25 meters, of a vehicle that is detected, such as based on information provided by one or more vehicle sensors, to be stopped on the carriageway. As such, the control subsystem, such as the processing circuitry, may be configured to identify an instance in which a vehicle has broken down and a person is attending to or otherwise associated with the vehicle while standing within the driving lane of the carriageway.

In an instance in which the larger object 16 that is located within the driving lane 14 of the carriageway 12 is determined to not be within the predefined distance of a stopped vehicle, the control subsystem 20 includes means, such as the processing circuitry 22 or the like, for determining whether the autonomous vehicle is able to safely change lanes, if necessary, so to have a lateral gap of at least one empty lane between the autonomous vehicle 10 and the object at the time at which the autonomous vehicle passes most closely to the object. See block 56. As mentioned herein, the control subsystem, such as the processing circuitry, is configured to determine the gap, if any, between the object and the autonomous vehicle when the autonomous vehicle passes most closely to the object based upon the relative locations of the object and the autonomous vehicle, the direction of movement of the object and the autonomous vehicle and the speed with which both object and the autonomous vehicle are moving.

The control subsystem 20, such as the processing circuitry 22, may be configured to determine whether the autonomous vehicle 10 is able to change lanes 14 by evaluating the traffic conditions in the proximity of the autonomous vehicle. In this regard, the control subsystem, such as the processing circuitry, may be configured to evaluate information regarding the location of other vehicles or objects that have been detected relative to the autonomous vehicle and, after taking into account the relative speeds of the autonomous vehicle and the other vehicles in the proximity of the autonomous vehicle, to determine whether the autonomous vehicle can safely change lanes if necessary to ensure that at least one lane is vacant between the autonomous vehicle and the object 16 that has been detected at the time that the autonomous vehicle passes the object most closely.

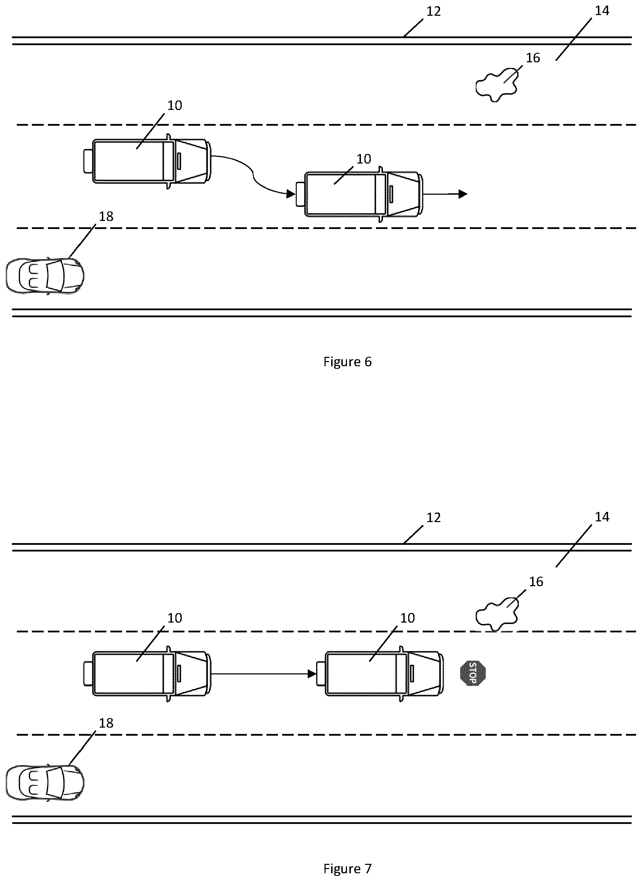

In an instance in which the control subsystem 20, such as the processing circuitry 22, determines that the autonomous vehicle 10 is able to safely change lanes 14, the control subsystem includes means, such as the processing circuitry or the like, for defining a motion plan for the autonomous vehicle that causes the autonomous vehicle to change lanes, if necessary to have the lateral gap of at least one empty lane between the autonomous vehicle and the object 16 at the time in which the autonomous vehicle most closely passes the object. See block 58 of Figure 4A as well as Figure 5 which depicts the transition of an autonomous vehicle to the rightmost lane to establish an empty lane between the autonomous vehicle and the object. For example, the autonomous vehicle may be directed to change one or more lanes in some instances. However, in an instance in which the control subsystem, such as the processing circuitry, determines that the autonomous vehicle would need to change lanes to have the desired lateral gap with respect to the object, but that the autonomous vehicle is unable to safely change lanes, such as in an instance as shown, for example, in Figure 6 in which another vehicle 18 is driving alongside of the autonomous vehicle in the lane to which the autonomous vehicle would otherwise have transitioned, the control subsystem includes means, such as the processing circuitry or the like, for slowing the autonomous vehicle and biasing the autonomous vehicle away from the object so as to increase the lateral gap between the autonomous vehicle and the object. See block 60. In relation to biasing away from the object, the motion plan that is defined causes the autonomous vehicle to remain in the same lane but to move within the lane laterally so as to be further away from the object. In relation to slowing of the autonomous vehicle, the autonomous vehicle of an example embodiment is slowed to a speed such that the autonomous vehicle can come to a halt prior to reaching the object in an instance in which the object moves into the path of travel of the autonomous vehicle.

Referring now to block 70 of Figure 4B, in an instance in which the larger object 16 is determined to be within a driving lane 14 of the carriageway 12 and within a predefined distance of a stopped vehicle, such as in instance in which a person is attending to the stopped vehicle, the control subsystem 20 includes means, such as the processing circuitry 22 or the like, for determining whether the autonomous vehicle10 is able to safely change lanes, if necessary, in order to pass the object with at least a predefined lateral gap maintained between the autonomous vehicle and the object at the time at which the autonomous vehicle most closely passes the object. In an instance in which the autonomous vehicle is determined to be able to safely change lanes, the control subsystem includes means, such as the processing circuitry or the like, for defining the motion plan for the autonomous vehicle so as to change lanes, if necessary to pass the object with at least the predefined lateral distance. See block 72.

However, in an instance in which the autonomous vehicle 10 is determined not to be able to safely change lanes 14, such as due to other vehicles driving near the autonomous vehicle in the lane to which the autonomous vehicle would otherwise transition, the control subsystem 20 includes means, such as the processing circuitry 22 or the like, for determining whether the autonomous vehicle is able to pass the object 16 while remaining within the same lane with at least a minimum lateral distance between the autonomous vehicle and the object at the time at which the autonomous vehicle most closely passes the object. See block 74 of Figure 4B. The minimum lateral distance is no greater than and may be smaller than the predefined lateral gap. In an instance in which the autonomous vehicle is determined to be able to pass the object with at least the minimum lateral distance maintained between the autonomous vehicle and the object, the control subsystem includes means, such as the processing circuitry or the like, for defining a motion plan that causes the autonomous vehicle to slow and to bias away from the object such that at least the minimum lateral distance is maintained between the autonomous vehicle and the object. See block 76. However, in an instance in which the autonomous vehicle is determined to not be able to pass the object with at least the minimum lateral distance, the control subsystem includes means, such as the processing circuitry or the like, for causing the autonomous vehicle to stop prior to reaching the object. See block 78.

In an instance in which the larger object 16 is not detected to be within a driving lane 14 of the carriageway 12, the control subsystem 20 includes means, such as the processing circuitry 22 or the like, for determining whether the larger object is located in a non-driving area of the carriageway, such as the shoulder of the road, a gore point or the like. See block 62 of Figure 4A. In an instance in which the larger object is determined to be within a non-driving area of the carriageway, the control subsystem may also include means, such as the processing circuitry or the like, for determining whether the autonomous vehicle 10 is able to safely change lanes, if necessary, to pass the object with at least a predefined lateral distance between the autonomous vehicle and the object at the time at which the autonomous vehicle most closely passes the object. See block 70 of Figure 4B. In an instance in which the autonomous vehicle is determined to be able to safely change lanes, the control subsystem includes means, such as the processing circuitry or the like, for defining a motion plan to cause the autonomous vehicle to change lanes, such as by changing to a lane further way from the object, if necessary in order to pass the object with a gap of at least the predefined lateral distance. See block 72.

In an instance in which the autonomous vehicle 10 was determined to not be able to change lanes 14 to pass the object 16 with a predefined lateral distance, the control subsystem 20 includes means, such as the processing circuitry 22 or the like, for determining whether the autonomous vehicle is able to pass the object while remaining within the same lane with at least the minimum lateral distance being maintained relative to the object at the time that the autonomous vehicle closest to the object. See block 74. In an instance in which the autonomous vehicle is determined to pass the object with a gap of at least the minimum lateral distance, the control subsystem includes means, such as the processing circuitry or the like, for defining the motion plan to cause the autonomous vehicle to slow and to bias away from the object so as to pass the object with a gap of at least the minimum lateral distance. See block 76. However, if the autonomous vehicle is determined to not be able to pass the object with at least the minimum lateral distance, the control subsystem includes means, such as the processing circuitry or the like, for defining a motion plan to cause the autonomous vehicle to stop prior to reaching the object. See block 78.

In an instance in which the larger object 16 has been determined to not be within a driving lane 14 of the carriageway 12 and to not be in a non-driving area of the carriageway, such as an instance in which the larger object is off of the carriageway, but near the carriageway, such as within a predefined distance, e.g., 6 feet, of the carriageway, the control subsystem 20 includes means, such as the processing circuitry 22 or the like, for determining whether the autonomous vehicle 10 is able to maintain a minimum lateral distance with respect to the object that is off of the carriageway at the point at which the autonomous vehicle most closely passes the object. See block 64 of Figure 4A. In an instance in which the autonomous vehicle is able to maintain the minimum lateral distance with respect to the object, the control subsystem includes means, such as the processing circuitry or the like, for defining a motion plan for the autonomous vehicle to cause the autonomous vehicle to proceed along its route. See block 66. However, in an instance in which the autonomous vehicle is determined to be unable to maintain the minimum lateral distance with respect to the object, the control subsystem includes means, such as the processing circuitry or the like, for defining the motion plan and so as to cause the autonomous vehicle to stop prior to reaching the object. See block 68.

As such, in an instance in which a larger object 16 is detected, the control subsystem 20 and an associated method and computer program product may be configured to define a variety of different motion plans for the autonomous vehicle 10 based not only on the object being classified as a larger object as a result of the size of the object, but also based upon the location coordinates of the object relative to the autonomous vehicle. In each of the different scenarios, however, the motion plan that is defined by the control subsystem provides for the efficient and safe navigation of the autonomous vehicle relative to the object that has been detected, thereby potentially creating less disruption to the traffic flow about the object.

### MOTION PLAN DEFINED IN RESPONSE TO DETECTION OF A SMALLER OBJECT

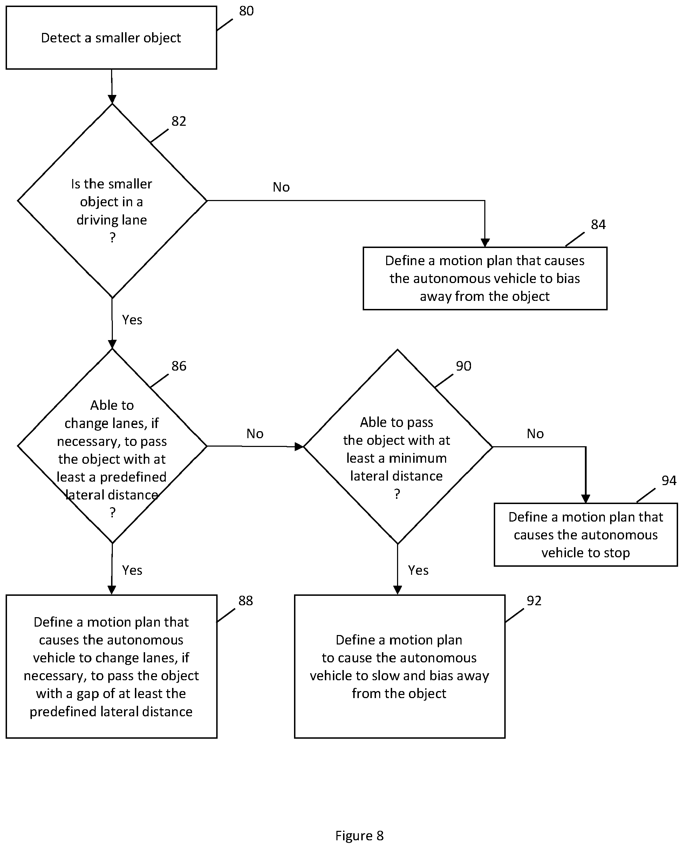

In an instance in which as smaller object 16 has been detected as shown in block 80 of Figure 8, the control subsystem 20 includes means, such as the processing circuitry 22 or the like, for determining whether the smaller object is in a driving lane 14 of the carriageway 12. See block 82. In an instance in which the smaller object is not within a driving lane of the carriageway, such as in an instance in which the object is within a non-driving area of the carriageway or is otherwise detected to be adjacent or otherwise near the carriageway, the control subsystem includes means, such as the processing circuitry 22 or the like, for defining a motion plan that causes the autonomous vehicle to bias away from the object, thereby increasing the gap between the autonomous vehicle and the object at the time at which the autonomous vehicle passes the object. See block 84. However, in an instance in which the object is determined to be within a driving lane of the carriageway, the control subsystem includes means, such as the processing circuitry or the like, for determining whether the autonomous vehicle is able to safely change lanes, if necessary to be able to pass the object with at least a predefined lateral distance at the time at which the autonomous vehicle passes most closely to the object that has been detected. See block 86.

In an instance in which the autonomous vehicle 10 is able to safely change lanes 14, if necessary in order to pass the object 16 with at least a predefined lateral distance therebetween, the control subsystem 20 includes means, such as the processing circuitry 22 or the like, for defining a motion plan that causes the autonomous vehicle to change lanes, if necessary, in a direction away from the object so as to allow the autonomous vehicle to pass the object with at least a gap of the predefined lateral distance. See block 88 of Figure 8. However, in an instance in which the autonomous vehicle is determined to not be able to safely change lanes, the control subsystem includes means, such as a processing circuitry or the like, for determining whether the autonomous vehicle is able to pass the object with at least a minimum lateral distance between the autonomous vehicle and the object at the time at which the autonomous vehicle most closely passes the object. See block 90. The minimum lateral distance may be less than the predefined lateral distance.

In an instance in which the autonomous vehicle 10 is determined to pass the object 16 with at least the minimum lateral distance, the control subsystem 20 includes means, such as the processing circuitry 22 or the like, for defining a motion plan that causes the autonomous vehicle to slow and to bias away from the object, while remaining within the same lane 14 in which the autonomous vehicle is traveling so as to increase the gap between the autonomous vehicle and the object, thereby allowing the autonomous vehicle to pass the object of a gap of at least the minimum lateral distance. See block 92 of Figure 8. In regards to slowing the autonomous vehicle, the autonomous vehicle of an example embodiment is slowed to a speed such that the autonomous vehicle can come to a halt prior to reaching the object in an instance in which the object moves into the path of travel of the autonomous vehicle. However, in an instance in which the autonomous vehicle is determined to not be able to pass the object with at least a minimum lateral distance, the control subsystem includes means, such as the processing circuitry or the like, for defining a motion plan to cause the autonomous vehicle to stop prior to reaching the object. See block 94 as well as Figure 7.

As such, in an instance in which a smaller object 16 is identified, the control subsystem 20 as well as the associated method and computer program product also define a motion plan based not only upon the size of the object and the classification of the object as a smaller object, but also upon the location coordinates of the object relative to the autonomous vehicle 10. As such, a motion plan is defined to allow the autonomous vehicle to respond in an efficient and safe manner to the detection of the smaller object. However, as the foregoing examples illustrate, the motion plans that are defined are different for a larger object than for a smaller object, thereby tailoring the response of the autonomous vehicle based upon the size of the unknown object.

### DIFFERENT SIZE CLASSIFICATIONS

As described above, other embodiments determine the size of the object 16 in other manners, such as by classifying the object not as a larger object or a smaller object, but as a larger object, an intermediate object or a smaller object. In this example embodiment, the control subsystem 20, method and computer program product may be configured to respond to the detection of a larger object as described above in conjunction with Figures 4A and 4B and to respond to the detection of an intermediate object as described above in conjunction with Figure 8. In this example embodiment in which a smaller object is defined, such as an object having cross-sectional dimensions of no more than 20 cm x 20 cm, the control subsystem, such as processing circuitry 22, may be configured to respond in a different manner than that described above either in conjunction with a larger object or an intermediate object since a smaller object of this example embodiment is of such a size that the object is not a person. For example, in an instance in which an object is detected that is not a larger object or an intermediate object, but a smaller object, such as a smaller object having a size of no more than 20 cm x 20 cm, the control subsystem may include means, such as the processing circuitry or the like, for defining a motion plan to cause the autonomous vehicle 10 to straddle the object. By straddling the object, the object passes beneath the autonomous vehicle and in between the tires of the autonomous vehicle, thereby limiting lateral movement of the autonomous vehicle along the carriage lane and increasing the efficiency and safety with which the autonomous vehicle navigates along the carriageway 12 while creating less disruption to the traffic flow about the object.

### PROVISION OF AN ALERT AND/OR UPDATING OF A MAP

In some embodiments, in addition to defining a motion plan for the autonomous vehicle 10 in response to the detection of an object 16, the control subsystem 20 includes means, such as the processing circuitry 22, the communication interface 26 or the like, for communicating with another entity to alert the other entity of the presence of the object. For example, in an embodiment in which the control subsystem is carried by the autonomous vehicle, the control subsystem, such as the communication interface, may be configured to cause a signal to be transmitted to an operation server, e.g., an oversight system, a control center, etc., and/or to the communication system(s) of law enforcement and/or traffic safety personnel to alert the other entities as to the presence of the object. In addition to merely providing an alert as to the object, information regarding the location of the object and/or the size of the object may be provided. As such, the notification of law enforcement or safety personnel may also allow the law enforcement of safety personnel to be dispatched to address the object, such as by ensuring removal of the object from the carriageway.

In response to an alert, an operation server may alert other autonomous vehicles traveling along the carriageway 12 in the same direction as the autonomous vehicle 10 that detected the object 16. These other autonomous vehicles generally trail the autonomous vehicle that detected the object by some distance and, as a result, will potentially encounter the same object at a later point in time. In this regard, the operation server may be configured to redefine the motion plans for the other autonomous vehicles so as to allow the other autonomous vehicle not only to be alert to detection of the object, but to position the other autonomous vehicles in advance of reaching the object so as to be further away from the object, thereby reducing or eliminating the evasive maneuvers to be taken by the other autonomous vehicles upon detection of the object.

Although such an alert may be provided in response to the detection of a single object 16, the control subsystem 20, such as the processing circuitry 22, of an example embodiment is configured to identify an instance in which a predefined number of objects 16 are detected within a predefined distance or a predefined area and to issue an alert as described above in an instance in which at least the predefined number of objects are identified within the predefined distance or the predefined area, such as in the instance in which a debris field is identified on the carriageway 12.

The detection of the object 16 may also facilitate updating of a map that includes a representation of the carriageway 12. In this regard, the autonomous vehicle 10 may maintain a map of the roadways including the carriageway along which the autonomous vehicle is traveling. The map may be stored, for example, in memory 24 and accessible to the processing circuitry 22, such as in conjunction with navigation of the autonomous vehicle. In response to the detection of an object, the control subsystem may include means, such as the processing circuitry or the like, for updating the map to indicate the location of the object that has been detected and, in some embodiments, the size of the object. Once updated, the control subsystem, such as the processing circuitry, the communication interface 26 or the like, may be configured to share a copy of the map, such as with the operation sever and/or other nearby autonomous vehicles, thereby providing an update as to the detected object.

In other embodiments, a map of the roadways including the carriageway 12 along which the autonomous vehicle 10 is traveling is maintained off board the autonomous vehicle, such as by the operation server. In these embodiments, the control subsystem 20 includes means, such as a processing circuitry 22 or the like, for providing information, such as via the communication interface 26, in response to detecting the object. The information may include the location coordinates of the object and, in some embodiments, information regarding the size of the object. The operation server of this example embodiment may be configured to similarly update the map to include information regarding the object that has been detected and, in some embodiments, to then provide the updated map data to other autonomous vehicles in the vicinity of the object in order to further alert the other autonomous vehicles of the object that has been detected.

### EXAMPLE AUTONOMOUS VEHICLE AND ITS OPERATION

Figure 9 shows a block diagram of an example vehicle ecosystem 100 in which autonomous driving operations can be determined. As shown in Figure 9, the autonomous vehicle 102 may be a semi-trailer truck. The vehicle ecosystem includes several systems and components that can generate and/or deliver one or more sources of information/data and related services to the in-vehicle control computer 104 that may be located in an autonomous vehicle. The in-vehicle control computer can be in data communication with a plurality of vehicle subsystems 106, all of which can be resident in the autonomous vehicle. A vehicle subsystem interface 108 is provided to facilitate data communication between the in-vehicle control computer and the plurality of vehicle subsystems. In some embodiments, the vehicle subsystem interface can include a controller area network (CAN) controller to communicate with devices in the vehicle subsystems.

The autonomous vehicle 102 may include various vehicle subsystems that support of the operation of autonomous vehicle. The vehicle subsystems may include the control subsystem 20, a vehicle drive subsystem 110, a vehicle sensor subsystem 112, and/or a vehicle control subsystem 114. The components or devices of the vehicle drive subsystem, the vehicle sensor subsystem, and the vehicle control subsystem shown in Figure 9 are examples. The vehicle drive subsystem may include components operable to provide powered motion for the autonomous vehicle. In an example embodiment, the vehicle drive subsystem may include an engine/motor 110a, wheels/tires 110b, a transmission 1 10c, an electrical subsystem 1 10d, and a power source 110e.

The vehicle sensor subsystem 112 may include a number of sensors 116 configured to sense information about an environment or condition of the autonomous vehicle 102. The vehicle sensor subsystem may include one or more cameras 116a or image capture devices, a radar unit 116b, one or more temperature sensors 116c, a wireless communication unit 116d (e.g., a cellular communication transceiver), an inertial measurement unit (IMU) 116e, a laser range finder/LiDAR unit 116f, a Global Positioning System (GPS) transceiver 116g, and/or a wiper control system 116h. The vehicle sensor subsystem may also include sensors configured to monitor internal systems of the autonomous vehicle (e.g., an O2 monitor, a fuel gauge, an engine oil temperature, etc.).

The IMU 116e may include any combination of sensors (e.g., accelerometers and gyroscopes) configured to sense position and orientation changes of the autonomous vehicle 102 based on inertial acceleration. The GPS transceiver 116g may be any sensor configured to estimate a geographic location of the autonomous vehicle. For this purpose, the GPS transceiver may include a receiver/transmitter operable to provide information regarding the position of the autonomous vehicle with respect to the Earth. The radar unit 116b may represent a system that utilizes radio signals to sense objects within the local environment of the autonomous vehicle. In some embodiments, in addition to sensing the objects, the radar unit may additionally be configured to sense the speed and the heading of the objects proximate to the autonomous vehicle. The laser range finder or LiDAR unit 116f may be any sensor configured to sense objects in the environment in which the autonomous vehicle is located using lasers. The cameras 116a may include one or more devices configured to capture a plurality of images of the environment of the autonomous vehicle. The cameras may be still image cameras or motion video cameras.

The vehicle control subsystem 114 may be configured to control the operation of the autonomous vehicle 102 and its components. Accordingly, the vehicle control subsystem may include various elements such as a throttle and gear 114a, a brake unit 114b, a navigation unit 114c, a steering system 114d, and/or an autonomous control unit 114e. The throttle may be configured to control, for instance, the operating speed of the engine and, in turn, control the speed of the autonomous vehicle. The gear may be configured to control the gear selection of the transmission. The brake unit can include any combination of mechanisms configured to decelerate the autonomous vehicle. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle. The navigation unit may additionally be configured to update the driving path dynamically while the autonomous vehicle is in operation. In some embodiments, the navigation unit may be configured to incorporate data from the GPS transceiver 116g and one or more predetermined maps so as to determine the driving path for the autonomous vehicle. The steering system may represent any combination of mechanisms that may be operable to adjust the heading of autonomous vehicle in an autonomous mode or in a driver-controlled mode.

The autonomous control unit 114e may represent a control system configured to identify, evaluate, and avoid or otherwise negotiate potential obstacles or obstructions in the environment of the autonomous vehicle 102. In general, the autonomous control unit may be configured to control the autonomous vehicle for operation without a driver or to provide driver assistance in controlling the autonomous vehicle. In some embodiments, the autonomous control unit may be configured to incorporate data from the GPS transceiver 116g, the radar 116b, the LiDAR unit 116f, the cameras 116a, and/or other vehicle subsystems to determine the driving path or trajectory for the autonomous vehicle.

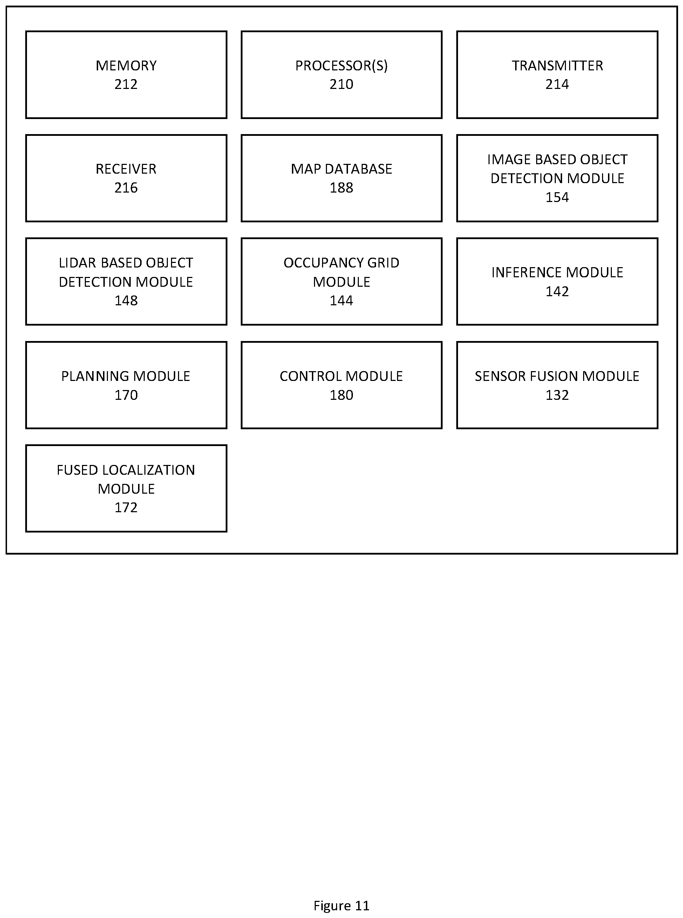

Many or all of the functions of the autonomous vehicle 102 can be controlled by the in-vehicle control computer 104. The in-vehicle control computer may include at least one data processor 118 (which can include at least one microprocessor) that executes processing instructions 120 stored in a non-transitory computer readable medium, such as the data storage device 122 or memory. The in-vehicle control computer may also represent a plurality of computing devices that may serve to control individual components or subsystems of the autonomous vehicle in a distributed fashion. In some embodiments, the data storage device may contain processing instructions (e.g., program logic) executable by the data processor to perform various methods and/or functions of the autonomous vehicle, including those described with respect to Figures 4A, 4B and 8 above and Figures 10 and 11 below.

The data storage device 122 may contain additional instructions as well, including instructions to transmit data to, receive data from, interact with, or control one or more of the vehicle drive subsystem 110, the vehicle sensor subsystem 112, and the vehicle control subsystem 114. The in-vehicle control computer 104 can be configured to include a data processor 118 and a data storage device 122. The in-vehicle control computer may control the function of the autonomous vehicle 102 based on inputs received from various vehicle subsystems (e.g., the vehicle drive subsystem, the vehicle sensor subsystem, and the vehicle control subsystem).

Figure 10 shows an exemplary system 130 for providing precise autonomous driving operations. The system includes several modules that can operate in the in-vehicle control computer 104, as described in conjunction with Figure 9. The in-vehicle control computer includes a sensor fusion module 132 shown in the top left corner of Figure 10, where the sensor fusion module may perform at least four image or signal processing operations. The sensor fusion module can obtain images from cameras located on an autonomous vehicle 10 to perform image segmentation 134 to detect the presence of moving objects (e.g., other vehicles, pedestrians, etc.,) and/or static obstacles (e.g., stop sign, speed bump, terrain, etc.,) located around the autonomous vehicle. The sensor fusion module 132 can obtain LiDAR point cloud data item from LiDAR sensors located on the autonomous vehicle to perform LiDAR segmentation 136 to detect the presence of objects and/or obstacles located around the autonomous vehicle.

The sensor fusion module 132 can perform instance segmentation 138 on image and/or point cloud data item to identify an outline (e.g., boxes) around the objects and/or obstacles located around the autonomous vehicle 10. The sensor fusion module can perform temporal fusion 140 where objects and/or obstacles from one image and/or one frame of point cloud data item are correlated with or associated with objects and/or obstacles from one or more images or frames subsequently received in time.

The sensor fusion module 132 can fuse the objects and/or obstacles from vehicle sensors, such as the images obtained from the camera and/or point cloud data item obtained from the LiDAR sensors. For example, the sensor fusion module may determine based on a location of two cameras that an image from one of the cameras comprising one half of a vehicle located in front of the autonomous vehicle 10 is the same as the vehicle located captured by another camera. The sensor fusion module may send the fused object information to the interference module 142 and the fused obstacle information to the occupancy grid module 144. The in-vehicle control computer may include the occupancy grid module 144, which can retrieve landmarks from a map database 146 stored in the in-vehicle control computer. The occupancy grid module 144 can determine drivable areas and/or obstacles from the fused obstacles obtained from the sensor fusion module 132 and the landmarks stored in the map database 146. For example, the occupancy grid module 144 can determine that a drivable area may include a speed bump obstacle.

Below the sensor fusion module 132, the in-vehicle control computer 104 includes a LiDAR based object detection module 148 that can perform object detection 150 based on point cloud data item obtained from the LiDAR sensors 152 located on the autonomous vehicle 10. The object detection technique can provide a location (e.g., in 3D world coordinates) of objects from the point cloud data item. Below the LiDAR based object detection module, the in-vehicle control computer includes an image based object detection module 154 that can perform object detection 156 based on images obtained from cameras 158 located on the autonomous vehicle. The object detection technique can employ a deep machine learning technique to provide a location (e.g., in 3D world coordinates) of objects from the image provided by the cameras 158.

The radar 160 on the autonomous vehicle 10 can scan an area in front of the autonomous vehicle or an area towards which the autonomous vehicle is driven. The radar data may be sent to the sensor fusion module 132 that can use the radar data to correlate the objects and/or obstacles detected by the radar 160 with the objects and/or obstacles detected from both the LiDAR point cloud data item and the camera image. The radar data also may be sent to the inference module 142 that can perform data processing on the radar data to track objects 162 as further described below.

The in-vehicle control computer 104 includes an interference module 142 that may receive the locations of the objects from the point cloud and the objects from the image, and the fused objects from the sensor fusion module 132. The interference module 142 also receives the radar data with which the interference module can track objects 162 from one point cloud data item and one image obtained at one time instance to another (or the next) point cloud data item and another image obtained at another subsequent time instance.

The interference module 142 may perform object attribute estimation 164 to estimate one or more attributes of an object detected in an image or point cloud data item. The one or more attributes of the object may include a type of object (e.g., pedestrian, car, or truck, etc.). The interference module may perform behavior prediction 166 to estimate or predict a motion pattern of an object detected in an image and/or a point cloud. The behavior prediction can be performed to detect a location of an object in a set of images received at different points in time (e.g., sequential images) or in a set of point cloud data item received at different points in time (e.g., sequential point cloud data items). In some embodiments the behavior prediction can be performed for each image received from a camera 158 and/or each point cloud data item received from the LiDAR sensor 152. In some embodiments, the interference module 142 can reduce its computational load by performing behavior prediction on every other or after every pre-determined number of images received from a camera 158 or point cloud data item received from the LiDAR sensor 152 (e.g., after every two images or after every three point cloud data items).

The behavior prediction 166 feature may determine the speed and direction of the objects that surround the autonomous vehicle 10 based on the radar data, where the speed and direction information can be used to predict or determine motion patterns of objects. A motion pattern may include a predicted trajectory information of an object over a pre-determined length of time in the future after an image is received from a camera 158. Based on the motion pattern predicted, the interference module 142 may assign motion pattern situational tags to the objects (e.g., "located at coordinates (x,y)," "stopped," "driving at 50mph," "speeding up" or "slowing down"). The situation tags can describe the motion pattern of the object. The interference module may send the one or more object attributes (e.g., types of the objects) and motion pattern situational tags to a planning module 170. The interference module 142 may perform an environment analysis 168 using any information acquired by the system 130 and any number and combination of its components.

The in-vehicle control computer 104 includes the planning module 170 that may receive the object attributes and motion pattern situational tags from the interference module 142, the drivable area and/or obstacles, and the vehicle location and pose information from the fused localization module 172 (further described below).

The planning module 170 can perform navigation planning 174 to determine a set of trajectories on which the autonomous vehicle 10 can be driven. The set of trajectories can be determined based on the drivable area information, the one or more object attributes of objects, the motion pattern situational tags of the objects, location of the obstacles, and the drivable area information. In some embodiments, the navigation planning may include determining an area next to the road where the autonomous vehicle can be safely parked in case of emergencies. The planning module may include behavioral decision making 176 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module may perform trajectory generation 178 and may select a trajectory from the set of trajectories determined by the navigation planning operation. The selected trajectory information may be sent by the planning module to the control module 180.

The in-vehicle control computer 104 includes a control module 180 that may receive the proposed trajectory from the planning module 170 and the autonomous vehicle location and pose from the fused localization module 172. The control module may include a system identifier 182. The control module can perform a model based trajectory refinement 184 to refine the proposed trajectory. For example, the control module 180 can apply a filtering (e.g., Kalman filter) to make the proposed trajectory data smooth and/or to minimize noise. The control module 180 may perform robust control 186 by determining, based on the refined proposed trajectory information and current location and/or pose of the autonomous vehicle, an amount of brake pressure to apply, a steering angle, a throttle amount to control the speed of the vehicle, and/or a transmission gear. The control module can send the determined brake pressure, steering angle, throttle amount, and/or transmission gear to one or more devices in the autonomous vehicle to control and facilitate precise driving operations of the autonomous vehicle 10.

The deep image-based object detection 156 performed by the image based object detection module 154 can also be used detect landmarks (e.g., stop signs, speed bumps, etc.,) on the road. The in-vehicle control computer 104 may include a fused localization module 172 that obtains the landmarks detected from the images, the landmarks obtained from a map database 188 stored on the in-vehicle control computer, the landmarks detected from the point cloud data item by the LiDAR based object detection module 148, the speed and displacement from the odometer sensor 190, and/or the estimated location of the autonomous vehicle from the GPS/IMU sensor 194 (e.g., GPS sensor 196 and IMU sensor 198) located on or in the autonomous vehicle 10. Based on this information, the fused localization module can perform a localization operation 192 to determine a location of the autonomous vehicle, which can be sent to the planning module 170 and the control module 180.

The fused localization module 172 can estimate a pose 200 of the autonomous vehicle 10 based, e.g., on the GPS and/or IMU sensors 194, the landmarks detected from the images, the landmarks obtained from the map database 188, and/or the landmarks detected from the point cloud data item by the LiDAR based object detection module 148. The pose of the autonomous vehicle can be sent to the planning module 170 and the control module 180. The fused localization module can also estimate status (e.g., location, possible angle of movement) of the trailer unit 202 based on, for example, the information provided by the IMU sensor 198 (e.g., angular rate and/or linear velocity). The fused localization module may also check the map content 204, e.g., to identify new objects perceived by the LiDARs 152, radar 160, and/or cameras 158 but are not stored in the landmarks map 188.

Figure 11 shows an exemplary block diagram of an in-vehicle control computer 104 included in an autonomous vehicle 10. The in-vehicle control computer includes processing circuitry, such as at least one processor 210 and a memory 212 having instructions stored thereupon. The instructions upon execution by the processor configure the in-vehicle control computer and/or the various modules of the in-vehicle control computer to perform the operations described above. The transmitter 214 may transmit or send information or data to one or more devices in the autonomous vehicle. For example, a transmitter can send an instruction to one or more motors of the steering wheel to steer the autonomous vehicle. The receiver 216 may receive information or data transmitted or sent by one or more devices. For example, the receiver receives a status of the current speed from the odometer sensor or the current transmission gear from the transmission. The transmitter and receiver also may be configured to communicate with the control subsystem 20 described above.

Figures 4A, 4B and 8 illustrate operations of a control subsystem 20, method and computer program product according to some example embodiments. It will be understood that each operation of the flowchart or diagrams, and combinations of operations in the flowchart or diagrams, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may comprise one or more memory devices of a control subsystem (for example, memory 24) storing instructions executable by a processor in the control subsystem (for example, by processing circuitry 22). In some example embodiments, the computer program instructions of the computer program product(s) which embody the procedures described above may be stored by memory devices of a plurality of computing devices. As will be appreciated, any such computer program product may be loaded onto a computer or other programmable apparatus (for example, control subsystem 20) to produce a machine, such that the computer program product including the instructions which execute on the computer or other programmable apparatus creates means for implementing the functions specified in the flowchart block(s). Further, the computer program product may comprise one or more computer-readable memories on which the computer program instructions may be stored such that the one or more computer-readable memories can direct a computer or other programmable apparatus to function in a particular manner, such that the computer program product may comprise an article of manufacture which implements the function specified in the flowchart block(s). The computer program instructions of one or more computer program products may also be loaded onto a computer or other programmable apparatus (for example, control subsystem 20 and/or other apparatus) to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

As used herein, in an instance in which the control subsystem 20 is described to receive data or other information from another device, it will be appreciated that the data or other information may be received directly from the other device and/or may be received indirectly via one or more intermediary devices, such as, for example, one or more servers, relays, routers, network access points, and/or the like. Similarly, in an instance in which the control subsystem is described herein to transmit data or other information to another device, it will be appreciated that the data or other information may be sent directly to the other device or may be sent to the other device via one or more interlinking devices, such as, for example, one or more servers, relays, routers, network access points, and/or the like.

In this regard, devices, including the control subsystem 20 or components thereof, shown or discussed as coupled or directly coupled or communicating with each other may be indirectly coupled or communicating through some interface, device, or intermediate component whether electrically, mechanically, or otherwise. In addition, techniques, systems, subsystems, and methods described and illustrated in the various embodiments as discrete or separate may be combined or integrated with other systems, modules, techniques, or methods.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and
that modifications and other embodiments are intended to be included, as far as included within the scope of the appended claims.

The extent of the protection conferred by this document shall be determined by the following claims.

## Claims

1. A computer-implemented method comprising:
receiving sensor data from at least one vehicle sensor (28) of an autonomous vehicle (10), wherein the sensor data comprises location coordinates of an object (16) on a carriageway (12) along which the autonomous vehicle is to travel;
evaluating the sensor data to determine whether the object is known or unknown;
in an instance in which the object is unknown, determining a size of the object, wherein determining the size of the object comprises determining a height and/or width associated with the object;
classifying the object as a larger object or a smaller object based on the height and/or width of the object;
defining a motion plan for the autonomous vehicle depending upon the size of the object and the location coordinates of the object relative to the autonomous vehicle, wherein the motion plan that is defined is dependent upon the size of the object with different motion plans being defined for differently sized objects; and
updating driving instructions for the autonomous vehicle based upon the motion plan that is defined;
wherein defining the motion plan for the autonomous vehicle comprises defining the motion plan for the autonomous vehicle such that a larger distance is maintained between the autonomous vehicle and the object in an instance in which the object is classified as the larger object than in an instance in which the object is classified as the smaller object.

2. A method according to Claim 1, further comprising classifying the object as a larger object, an intermediate object or a smaller object based on the height of the obj ect.

3. A method according to Claim 2 wherein defining the motion plan for the autonomous vehicle comprises defining the motion plan for the autonomous vehicle such that the autonomous vehicle straddles the object in an instance in which the object is classified as the smaller object.

4. A method according to one or more preceding claims wherein the motion plan is one of changing lanes, slowing and biasing away from the object or stopping the autonomous vehicle depending upon the size of the object and the location coordinates of the object relative to the autonomous vehicle.

5. A computer program product comprising at least one computer-readable storage medium having computer-executable program code instructions stored therein, the computer-executable program code instructions comprising program code instructions configured to perform the method of any preceding claim.

6. A control subsystem (20) of an autonomous vehicle, the control subsystem comprising processing circuitry configured to perform the method of any of claims 1 to 4.

## Patentansprüche

1. Ein computerimplementiertes Verfahren, beinhaltend:
Empfangen von Sensordaten von mindestens einem Fahrzeugsensor (28) eines autonomen Fahrzeugs (10), wobei die Sensordaten Standortkoordinaten eines Objekts (16) auf einer Fahrbahn (12) beinhalten, entlang derer das autonome Fahrzeug fahren soll;
Auswerten der Sensordaten, um zu bestimmen, ob das Objekt bekannt oder unbekannt ist;
in einem Fall, in dem das Objekt unbekannt ist, Bestimmen einer Größe des Objekts, wobei Bestimmen der Größe des Objekts Bestimmen einer mit dem Objekt verbundenen Höhe und/oder Breite beinhaltet;
Klassifizieren des Objekts als größeres Objekt oder kleineres Objekt basierend auf der Höhe und/oder Breite des Objekts,
Definieren eines Bewegungsplans für das autonome Fahrzeug abhängig von der Größe des Objekts und den Standortkoordinaten des Objekts relativ zum autonomen Fahrzeug, wobei der Bewegungsplan, der definiert wird, von der Größe des Objekts abhängt und unterschiedliche Bewegungspläne für unterschiedlich große Objekte definiert werden; und
Aktualisieren von Fahranweisungen für das autonome Fahrzeug basierend auf dem Bewegungsplan, der definiert wird;
wobei Definieren des Bewegungsplans für das autonome Fahrzeug Definieren des Bewegungsplans für das autonome Fahrzeug derart beinhaltet, dass ein größerer Abstand zwischen dem autonomen Fahrzeug und dem Objekt, in einem Fall, in dem das Objekt als das größere Objekt klassifiziert wird, als in einem Fall, in dem das Objekt als das kleinere Objekt klassifiziert wird, eingehalten wird.

2. Verfahren nach Anspruch 1, ferner beinhaltend Klassifizieren des Objekts als ein größeres Objekt, ein mittleres Objekt oder ein kleineres Objekt basierend auf der Höhe des Objekts.

3. Verfahren nach Anspruch 2, wobei Definieren des Bewegungsplans für das autonome Fahrzeug Definieren des Bewegungsplans für das autonome Fahrzeug derart beinhaltet, dass das autonome Fahrzeug das Objekt in einem Fall, in dem das Objekt als das kleinere Objekt klassifiziert wird, überbrückt.

4. Verfahren nach einem oder mehreren der vorhergehenden Ansprüche, wobei es sich bei dem Bewegungsplan um entweder Wechseln von Fahrspur, Verlangsamen und Ausweichen vor dem Objekt oder Anhalten des autonomen Fahrzeugs handelt, abhängig von der Größe des Objekts und den Standortkoordinaten des Objekts relativ zum autonomen Fahrzeug.

5. Ein Computerprogrammprodukt, beinhaltend mindestens ein computerlesbares Speichermedium, auf dem computerausführbare Programmcodeanweisungen gespeichert sind, wobei die computerausführbaren Programmcodeanweisungen Programmcodeanweisungen beinhalten, die dazu konfiguriert sind, das Verfahren eines der vorhergehenden Ansprüche durchzuführen.

6. Ein Steuersubsystem (20) eines autonomen Fahrzeugs, wobei das Steuersubsystem eine Verarbeitungsschaltung beinhaltet, die dazu konfiguriert ist, das Verfahren nach einem der Ansprüche 1 bis 4 durchzuführen.

## Revendications

1. Un procédé mis en oeuvre par ordinateur comprenant :
la réception de données de capteur provenant d'au moins un capteur (28) de véhicule d'un véhicule autonome (10), dans lequel les données de capteur comprennent des coordonnées de localisation d'un objet (16) sur une chaussée (12) le long de laquelle le véhicule autonome doit progresser ;
l'évaluation des données de capteur pour déterminer si l'objet est connu ou inconnu ;
dans un cas où l'objet est inconnu, la détermination d'une taille de l'objet, dans lequel la détermination de la taille de l'objet comprend la détermination d'une hauteur et/ou d'une largeur associée à l'objet ;
le classement de l'objet comme un objet plus grand ou un objet plus petit sur la base de la hauteur et/ou de la largeur de l'objet ;
la définition d'un plan de déplacement pour le véhicule autonome en fonction de la taille de l'objet et des coordonnées de localisation de l'objet par rapport au véhicule autonome, dans lequel le plan de déplacement qui est défini dépend de la taille de l'objet, différents plans de déplacement étant définis pour des objets de tailles différentes ; et
la mise à jour des instructions de conduite du véhicule autonome sur la base du plan de déplacement qui est défini ;
dans lequel la définition du plan de déplacement pour le véhicule autonome comprend la définition du plan de déplacement pour le véhicule autonome de telle sorte qu'une plus grande distance soit maintenue entre le véhicule autonome et l'objet dans un cas où l'objet est classé comme l'objet le plus grand que dans un cas où l'objet est classé comme l'objet le plus petit.

2. Le procédé selon la revendication 1, comprenant en outre le classement de l'objet comme un objet plus grand, un objet intermédiaire ou un objet plus petit sur la base de la hauteur de l'objet.

3. Le procédé selon la revendication 2, dans lequel la définition du plan de déplacement pour le véhicule autonome comprend la définition du plan de déplacement pour le véhicule autonome de telle sorte que le véhicule autonome chevauche l'objet dans un cas où l'objet est classé comme l'objet le plus petit.

4. Le procédé selon une ou plusieurs revendications précédentes, dans lequel le plan de déplacement est l'un parmi un changement de voies, un ralentissement et un éloignement de l'objet ou l'arrêt du véhicule autonome en fonction de la taille de l'objet et des coordonnées de localisation de l'objet par rapport au véhicule autonome.

5. Un produit de programme informatique comprenant au moins un support de stockage lisible par ordinateur contenant des instructions de code de programme exécutables par ordinateur stockées à l'intérieur de celui-ci, les instructions de code de programme exécutables par ordinateur comprenant des instructions de code de programme configurées pour réaliser le procédé selon l'une quelconque des revendications précédentes.

6. Un sous-système de commande (20) d'un véhicule autonome, le sous-système de commande comprenant un circuit de traitement configuré pour réaliser le procédé selon l'une quelconque des revendications 1 à 4.
